# EUROPÄISCHE PATENTANMELDUNG

(11) **EP 4 521 634 A1**
(43) Veröffentlichungstag der Anmeldung: **12.03.2025**
(21) Anmeldenummer: 23195528.7
(22) Anmeldetag: 05.09.2023
(51) Int. Cl.: H02S 30/00, H02S 20/23, F24S 25/61, F24S 25/65, F24S 25/00

(54) **DACHBEFESTIGER MIT OPTIMIERTER ABDICHTUNG**

(71) Anmelder: AEROCOMPACT Group Holding AG, 1010 Wien (AT)
(72) Erfinder: Burger, Markus, 6791 St. Gallenkirch (AT)
(74) Vertreter: Patent- und Rechtsanwälte Behrmann Wagner PartG mbB

(57) **Zusammenfassung**

Die Erfindung betrifft ein Dachbefestiger zur Befestigung von Auflageelementen, insbesondere Photovoltaik- und/oder Solarthermie-Paneelen (23), mit einer Dachkonstruktion (22), bevorzugt aufweisend eine Dacheindeckung (33) aus Bitumenschindeln und eine Dachunterkonstruktion (26) aus Holz, wobei der Dachbefestiger (01) ein Grundelement (03), bevorzugt eine Grundplatte (02) aufweist, die Befestigungsausnehmungen (14) zum Einbringen von Befestigungsmitteln (12), bevorzugt Befestigungsschrauben (13), aufweist und wobei das Grundelement (03) mit einem Abstandselement (05)verbunden ist, an dessen dem Grundelement (03) gegenüberliegenden Ende Haltemittel (19) zum direkten oder indirekten Befestigen von Auflageelementen ausgebildet sind und wobei auf einer dem Abstandselement (05) gegenüber liegenden Seite des Grundelements (03) abseits der Befestigungsausnehmungen (14) ein wenigstens teilweise elastisch verformbares Ausgleichsmaterial (10) angeordnet ist und die Befestigungsausnehmungen (14) im Grundelement (03) und deren Verlängerungen im Ausgleichsmaterial (10) wenigstens teilweise mit einer pastösen Dichtmasse (18) verfüllt sind.

## Beschreibung

Die vorliegende Erfindung betrifft einen Dachbefestiger zur Befestigung von Auflageelementen, insbesondere Photovoltaik- und/oder Solarthermie-Paneelen mit oder auf einer Dachkonstruktion, bevorzugt aufweisend eine Dacheindeckung aus Bitumenschindeln und eine Dachunterkonstruktion aus Holz sowie eine Befestigungsanordnung umfassend eine solche Dachkonstruktion und einen Dachbefestiger. Ferner betrifft die vorliegende Erfindung ein Verfahren zur Befestigung eines Dachbefestigers auf einer Dachkonstruktion.

Bei verschiedenen Gebäudetypen und Dachkonstruktionen werden z.B. auf einer Holzunterkonstruktion Schindeln oder Bahnen aus Bitumenmaterial verlegt, die die Witterungsbeständigkeit der Dachkonstruktion herstellen oder verbessern und insbesondere ein Eindringen von Feuchtigkeit in die Dachkonstruktion verhindern.

Um auf solchen oder ähnlichen Dachkonstruktionen Auflageelemente, insbesondere Photovoltaik- und/oder Solarthermie-Paneele befestigen zu können müssen, so wie bei anderen Dachkonstruktionen auch, Dachbefestiger bzw. Dachhaken mit der Dachkonstruktion verbunden oder an dieser befestigt werden, wobei die Dachbefestiger dann mittelbar oder unmittelbar zur Halterung oder Befestigung der Auflageelemente dienen. Die Dachbefestiger können beispielsweise fluchtend zueinander angeordnet werden, sodass dann eine Montageschiene mit einer Mehrzahl von Dachbefestigern verbunden wird, wobei dann auf der Montageschiene beispielsweise unter Verwendung von Modulklemmen die Auflageelemente befestigt und gesichert werden.

Bei den oben beschriebenen Dachschindeln oder Bahnen entstehen zwischen benachbarten Schindeln eine Lücke oder ein Spalt. Zwischen unterschiedlichen Reihen von Schindeln oder Bahnen, die überlappend angeordnet sind, um ein Eindringen von Feuchtigkeit effektiv zu verhindern, entstehen zudem ein Höhenversatz oder eine Kante.

Die Dachbefestiger müssen trotz der Unebenheiten auf der Oberfläche der Dacheindeckung auf der Dachkonstruktion montiert und vorteilhaft mit der Unterkonstruktion, beispielsweise aus Holz, verbunden werden. Dabei kann es notwendig sein den Dachbefestiger in Bereichen anzuordnen, in denen die vorbeschriebene Lücke zwischen zwei Schindeln oder die Kante oder der Höhenversatz zwischen unterschiedlichen Reihen von Schindeln ausgebildet ist. Gleichzeitig muss sichergestellt werden, dass eine sichere Befestigung der Dachbefestiger gegeben ist, dass durch das Anordnen und Befestigen des Dachbefestigers keine Undichtigkeiten in der Dachkonstruktion erzeugt werden und dass im Rahmen der Anordnung oder Befestigung der Dachbefestiger es nicht zu einer zu starken Verkippung der Dachbefestiger kommt, die eine fluchtende Anordnung der Dachbefestiger erschwert oder unmöglich macht.

Aus dem Stand der Technik sind insbesondere im Hinblick auf die Dichtheit oder Abdichtung entsprechender Dachbefestiger bereits unterschiedliche Ansätze bekannt.

In der US 10,171,026 B2 ist beispielsweise in einem Grundelement eines gattungsgemäßen Dachbefestigers eine Kavität vorgesehen oder ausgebildet, die nach dem Befestigen, insbesondere Verschrauben des Grundelements auf der Dachkonstruktion mit Dichtmasse verfüllt wird, um eine Abdichtung herzustellen oder sicherzustellen. Bei dieser Lösung ist die Montage des Dachbefestigers verhältnismäßig aufwendig, weil für jeden Dachbefestiger die Kavität mit Dichtmasse verfüllt werden muss. Auch wird relativ viel Dichtmasse benötigt, was ebenfalls nachteilig ist. Schließlich ist beim nachträglichen Verfüllen der Kavität mit Dichtmasse nicht ohne Weiteres sichergestellt, dass tatsächlich die Dichtigkeit hergestellt wird, insbesondere wenn der Dachbefestiger im Bereich von Lücken oder Absätzen zwischen Dachschindeln angeordnet und befestigt wird. In diesem Bereich ist neben der Dichtheit auch die Verkippung oder Ausrichtung des Dachbefestigers nur unzureichend anpassbar oder ausgleichbar.

Auch aus der US 9,912,284 B4 ist ein Dachbefestiger mit einem entsprechenden Basiselement vorgesehen, bei dem innerhalb des Basiselements zwei Reservoirs mit Dichtmasse vorgesehen sind, die rückseitig mit einer Art beweglichen Patronen- oder Kartuschenboden abschließen. Beim Einbringen von Befestigungsmittel, insbesondere beim Einbringen von Befestigungsschrauben werden die Schrauben durch Öffnungen in dem Kartuschenboden so eingeschraubt, dass der Schraubenkopf den beweglichen Kartuschenboden mitnimmt und die die Dichtmasse gegen die Dachkonstruktion presst und dadurch auch Dichtmasse unter dem Basiselement herausquetscht. Auch bei dieser Lösung ist verhältnismäßig viel Dichtmasse erforderlich, auch wenn, im Gegensatz zum vorangehend dargestellten Stand der Technik, eine nachteilige, nachträgliche Befüllung von Kavitäten vermieden werden kann. Die Handhabung ist aber deshalb relativ komplex, weil die Befestigungsmittel, die die Dichtmasse verdrängen nicht ausreichend sind, um den Dachbefestiger sicher an der Dachkonstruktion zu befestigen. Dazu sind weitere Befestigungsmittel notwendig, wie beispielsweise in den Fig. 5 und 6 der US 9,912,284 B2 dargestellt und beschrieben. Auch dieser Dachbefestiger eignet sich nicht, um zuverlässig im Übergangsbereich zwischen einzelnen Dachschindeln oder Reihen von Dachschindeln angeordnet zu werden und gleichzeitig zuverlässig eine Abdichtung herzustellen.

Weiterhin vertreibt die Firma "IronRidge" ein gattungsgemäßen Dachbefestiger unter dem Produktnamen "Quick Mount ^{®} HUG^{™} Halo UltraGrip^{™}". Dieser umfasst auf einer Unterseite eines Grundelements mit Befestigungsausnehmungen ein Dichtelement, das mit Ausnahme eines Rand des Grundelements vollflächig ausgebildet ist. Das Dichtelement ist bodenseitig mit einer Abdeckfolie versiegelt, die vor der Anbringung/Montage entfernt werden muss. Das Dichtelement verwendet einen mehrschichtigen Stapel von Komponenten, um eine Abdichtung bereit zu stellen. Das Dichtelement weist dabei mit einem Schaumstoff versehende Dichtungskombination auf, die das Eindringen von Wasser verhindert, indem sie an der Schindeloberfläche haftet und diese versiegelt. Nachteil daran ist, dass der freiliegende Rand des Grundelements auf der dem Dachfürst zugewandten Seite eine kleines Reservoir für Stauwasser und Feuchtigkeit ausbildet. Auch der Schutz der untersten Klebeschicht vor der Verwendung/Befestigung auf dem Dach, die durch die Abdeckfolie erreicht wird, ist sowohl bei der Herstellung als auch bei der Montage nachteilig, weil ein zusätzlicher Arbeitsschritt und Montage-Müll entstehen. Auch die Haltbarkeit wird beeinträchtigt, wenn bei der Lagerung die Abdeckfolie teilweise abgezogen oder beschädigt wird und dadurch die unterste Klebeschicht verunreinigt oder beeinträchtigt wird. Außerdem wird für das Dichtmittel viel Material, besonders zur Ausbildung der Klebeschicht, benötigt.

Hinsichtlich allgemeiner Verbindungsmittel, die keinen direkten Bezug zu Dachbefestigern für Auflageelemente, insbesondere Photovoltaik- und/oder Solarthermie-Paneele aufweisen, sei der Vollständigkeit halber noch auf die US 2012/005983 A1 sowie die US 6,036,595 A verwiesen.

Bezüglich weiterer, gattungsgemäßer Lösungen zu entsprechenden Dachbefestigern kann auf die US 10,998,847 B2, die US 11,255,369 B2, die US 11,695,369 B1, die US 2022/0352848 A1, die WO 2022/169989 A1, die WO 2022/246172 A1 sowie die WO 2022/240909 A1 verwiesen werden.

Basierend auf dem bekannten Stand der Technik besteht die Aufgabe der vorliegenden Erfindung darin, einen Dachbefestiger zur Befestigung von Auflageelementen, insbesondere Photovoltaik- und/oder Solarthermie-Paneelen mit einer Dachkonstruktion, bevorzugt aufweisend eine Dacheindeckung aus Bitumenschindeln und eine Dachunterkonstruktion aus Holz, eine Befestigungsanordnung umfassend einen derartigen Dachbefestiger und ein Verfahren zur Befestigung eines Dachbefestigers vorzuschlagen, die die Nachteile im Stand der Technik überwinden und insbesondere auch oder gerade im Bereich zwischen einzelnen Schindeln oder Reihen der Dacheindeckung eine schnelle, effektive und gleichzeitig sichere, insbesondere dichtende, Befestigung des Dachbefestigers ermöglichen.

Im Hinblick auf den Dachbefestiger wird diese Aufgabe durch einen Dachbefestiger mit den Merkmalen des Anspruchs 1 gelöst. Bezüglich der Befestigungsanordnung wird die Aufgabe mit einer Vorrichtung mit den Merkmalen des Anspruchs 7 gelöst. Bezüglich des Befestigungsverfahrens wird die Aufgabe der Erfindung durch ein Verfahren mit den Merkmalen des Anspruchs 8 gelöst.

Vorteilhafte Ausführungsformen der vorliegenden Erfindung sind Gegenstand der nachfolgenden Beschreibung, der Figurenbeschreibung, der Figuren sowie der Unteransprüche.

Grundsätzlich sollen, auch zur Vermeidung unnötiger Wiederholungen, nachfolgend vorrichtungsmäßig offenbarte und beanspruchte Merkmale auch als entsprechend verfahrensmäßig offenbart und beanspruchbar gelten, und umgekehrt.

Bezüglich des Dachbefestigers zur Befestigung von Auflageelementen, insbesondere Photovoltaik- und/oder Solarthermie-Paneelen mit, insbesondere auf einer Dachkonstruktion, bevorzugt aufweisend eine Dacheindeckung aus Bitumenschindeln und eine Dachunterkonstruktion aus Holz, umfasst der erfindungsgemäße Dachbefestiger ein Grundelement, bevorzugt eine Grundplatte, die Befestigungsausnehmungen zum Einbringen von Befestigungsmitteln, bevorzugt Befestigungsschrauben, aufweist, wobei das Grundelement mit einem Abstandselement verbunden ist, an dessen dem Grundelement gegenüberliegenden Ende Haltemittel zum direkten oder indirekten Befestigen von Auflageelementen ausgebildet sind.

Erfindungsgemäß ist vorgesehen, dass auf einer dem Abstandselement gegenüberliegenden Seite des Grundelements abseits der Befestigungsausnehmungen ein wenigstens teilweise elastisch verformbares Ausgleichsmaterial angeordnet ist und die Befestigungsausnehmungen im Grundelement und deren Verlängerungen im Ausgleichsmaterial wenigstens teilweise mit einer pastösen Dichtmasse verfüllt sind.

Durch den erfindungsgemäßen Dachbefestiger wird ermöglicht, dass dieser möglichst flexibel, auch im Bereich von Übergängen oder Spalten zwischen Dachschindeln, positionierbar ist, ohne dass dadurch eine zu starke Verkippung im Rahmen der Montage hervorgerufen wird. Dies wird im Wesentlichen durch das auf der Unterseite des Grundelements angeordnete Ausgleichsmaterial und dessen wenigstens teilweise elastische Verformung ermöglicht. Der besondere Vorteil an dem Ausgleichsmaterial liegt weiterhin darin, dass dieses nicht nur zur Nivellierung des Dachbefestigers an Absätzen oder Spalten zwischen Dachschindeln dient, sondern dass dieses gleichzeitig auch bereits eine Dichtwirkung gegenüber der Dachkonstruktion, insbesondere der Dacheindeckung, herstellt, wenn im Rahmen der Anordnung oder Befestigung des Dachhakens das Ausgleichsmaterial an die Dacheindeckung angepresst und teilweise und/oder abschnittsweise verformt wird. Besonders vorteilhaft wird die Dichtwirkung des Ausgleichsmaterials durch die pastöse Dichtmasse unterstützt, die nur im Bereich der Befestigungsausnehmungen und/oder deren Verlängerungen im Ausgleichsmaterial angeordnet ist. Denn beim Einbringen der Befestigungsmittel, insbesondere der Befestigungsschrauben, wird diese insgesamt geringe Menge an Dichtmasse durch die Befestigungsmittel sowohl im Bereich der Befestigungsausnehmungen und deren Verlängerungen verdrängt und verteilt, sodass die Befestigungsausnehmungen und deren Verlängerungen abgedichtet werden. Darüber hinaus erfolgt jedoch auch eine Mitnahme oder ein Mittransport der Dichtmasse durch die Befestigungsmittel in die Dachkonstruktion, bevorzugt bis in die Dachunterkonstruktion, sodass dadurch eine zweite, zusätzliche Dichtwirkung bereitgestellt wird, wobei in besonders vorteilhafter Weise nur ein Mindestmaß an Dichtmasse verwendet werden muss.

Ein weiterer, besonderer Vorteil der Erfindung besteht in der einfachen und effektiven Montage. Denn der Dachbefestiger kann einschließlich des Ausgleichsmaterials und der wenigstens teilweise mit pastöser Dichtmasse verfüllten Befestigungsausnehmungen und/oder deren Verlängerungen im Ausgleichsmaterial vorgefertigt sein, sodass bei der Befestigung oder Montage des Dachbefestigers auf der Dachkonstruktion lediglich die Befestigungsmittel in die Befestigungsausnehmungen eingebracht werden müssen. Dazu kann es besonders vorteilhaft sein, wenn die Eigenschaften der Dichtmasse, wie beispielsweise der Konsistenz, bevorzugt Viskosität, und/oder Haftwirkung, insbesondere Kapillarwirkung, der Dichtmasse so eingestellt sind, dass diese nicht von sich oder auf Grund der Schwerkraft aus den Befestigungsausnehmungen austritt sondern nur auf Grund zusätzlicher Kräfte ausgetragen werden kann. Dadurch wird sichergestellt, die Dichtmasse nicht bereits vor der Montage aus den Befestigungsausnehmungen austritt. Die Befestigungsausnehmungen können vorteilhaft als Schraubenlöcher ausgebildet sein.

Ein weiterer Vorteil der erfindungsgemäßen Dachbefestiger besteht darin, dass der Dachbefestiger der vorliegenden Erfindung mit einer besonders einfachen Konstruktion realisiert werden kann, wie nachfolgend noch im Detail ausgeführt werden wird. So sind insbesondere für das Grundelement, das Ausgleichsmaterial und das Dichtmassereservoir weder komplexe, beispielsweise profilierte Formteile, noch das Vorsehen von beweglichen Bauteilen, wie beispielsweise einem Verdrängungs- oder Kartuschenboden vorzusehen. Dies erleichtert auch in erheblichem Umfang die Herstellung und Vormontage der erfindungsgemäßen Dachbefestigers.

Das Grundelement oder die Grundplatte des Dachbefestigers kann bevorzugt aus Metall oder einem entsprechend dauerhaften und stabilen Kunststoff hergestellt sein. Das Abstandselement kann fest oder lösbar mit dem Grundelement verbunden sein und bevorzugt Einstellmöglichkeiten aufweisen, um eine Justage vorzunehmen und die Ausrichtung des Abstandselements anzupassen oder zu verbessern.

Die Befestigungsausnehmungen können beispielsweise als durchgängig im Grundelement ausgebildete Schraubenlöcher ausgebildet sein. Das Ausgleichsmaterial kann beispielsweise durch einen Haftvermittler, beispielsweise einen Klebstoff mit dem Grundelement verbunden sein.

Gemäß einer ersten vorteilhaften Ausführungsform kann vorgesehen sein, dass das Ausgleichsmaterial vollflächig oder am Rand des Grundelements ununterbrochen umlaufend ausgebildet ist. Bevorzugt umschließet das Ausgleichsmaterial die Verlängerung der Befestigungsausnehmungen im Grundelement um einen durchgängigen Kanal durch das Ausgleichsmaterial und das Grundelement zu erzeugen.

Ein vollflächig ausgebildetes Ausgleichsmaterial erlaubt eine einfache Anbringung des Ausgleichsmaterials, da wenig oder kaum Präzession für vollflächige Anbringung benötigt wird. Auch sorgt ein vollflächig auf der Unterseite des Grundelements angeordnetes Ausgleichsmaterial für eine entsprechend gute Dichtwirkung. Eine am Rand des Grundelements ununterbrochen umlaufend ausgebildete Schicht von Ausgleichsmaterial kann bei ähnlich guter Dichtwirkung die Menge an Ausgleichsmaterial verringern, auch wenn dadurch der Herstellungs- oder Vormontageaufwand durch die entsprechend benötigte Präzession vergrößert wird.

Das Ausgleichsmaterial hat vorteilhaft eine Stärke, rechtwinklig zur Grundfläche oder Grundebene des Grundelements von bevorzugt 5 bis 15mm. Besonders bevorzugt kann eine Stärke von 8 bis 12mm vorgesehen sein. Dadurch wir einerseits die notwendige Verformbarkeit geschaffen, um an unebene Untergründe anpassbar zu sein und andererseits nicht zu viel Material eingesetzt.

In einer weiteren, besonders vorteilhaften Ausführungsform kann vorgesehen sein, dass das Ausgleichsmaterial ein synthetisches und/oder natürliches Kautschukmaterial, bevorzugt EPDM (Ethylene propylene diene monomer) aufweist oder aus diesem besteht. Derartiges Kautschukmaterial eignet sich besonders gut, da es einerseits ein gewisses Maß an elastischer Verformbarkeit aufweist und damit ein dichtendes Anpressen an die Dacheindeckung besonders gut auch in Bereichen ermöglicht, in denen Versätze oder Kanten oder Höhenunterschiede der Dacheindeckung existieren. Gleichzeitig ist das Material von sich aus oder an sich entsprechend feuchtigkeitsundurchlässig, sodass dadurch die Dichtwirkung noch verbessert wird.

In einer weiteren, besonders vorteilhaften Ausgestaltung kann zudem vorgesehen sein, dass die Dichtmasse Butylkautschukmaterial (Co-Polymere von Isobutylen und Isopren) aufweist oder aus diesem besteht. Derartige Dichtmassen können vorteilhaft so ausgebildet werden, dass sie einerseits so pastös sind, dass sie zunächst, bevorzugt nach der Vormontage der Dachbefestiger, in den Befestigungsausnehmungen und deren Verlängerungen im Ausgleichsmaterial verharren oder verbleiben und erst dann ausgetragen oder herausgetragen werden, wenn die Befestigungsmittel in die Befestigungsausnehmungen eingebracht, insbesondere eingeschraubt werden. Außerdem haben derartige Materialien eine hervorragende Dichtwirkung und sind gut kompatibel mit Dachkonstruktionen mit Bitumenschindeln und/oder einer Holzunterkonstruktion.

Weiterhin kann in einer besonders vorteilhaften Ausführungsform vorgesehen sein, dass vom Dachbefestiger umfasste Befestigungsmittel, bevorzugt Befestigungsschrauben, ein Dichtmittel, bevorzugt einen Dichtring, aufweisen, welches im montierten Zustand an einer Oberseite des Grundelements dichtend mit dem Befestigungsmittel geklemmt ist. Dadurch kann zusätzlich zum Ausgleichsmaterial und der Dichtmasse ein weiterer Dichtmechanismus vorgesehen werden, der zusätzlich ein Eindringen von Feuchtigkeit von der Oberseite des Grundelements, insbesondere vom oberen Rand der Befestigungsausnehmungen, verhindert oder unterbindet. Die Dichtmittel können beispielweise auf der Unterseite eines Schraubenkopfes einer Befestigungsschraube angeordnet sein. Das Anziehen der Befestigungsschraube führt dann dazu, dass das Dichtmittel, insbesondere der Dichtring zwischen der Unterseite des Schraubenkopfes und der Oberseite des Grundelements dichtend angepresst wird und damit ein Eindringen von Feuchtigkeit in die Befestigungsausnehmungen im Grundelement verhindert wird. Selbst wenn das Dichtmittel beispielsweise durch Umwelteinflüsse wie UV-Strahlung od. dgl. ermüdet, porös wird oder ansonsten seine Dichtwirkung verliert, wirkt trotzdem noch die innerhalb der Befestigungsausnehmungen angeordnete Dichtmasse, die von den Befestigungsmitteln teilweise verdrängt wurde teilweise aber noch in der Befestigungsausnehmung und deren Verlängerung im Ausgleichsmaterial verbleibt weiterhin als Dichtung.

In einer weiteren, besonders vorteilhaften Ausgestaltung des Dachbefestigers kann zudem vorgesehen sein, dass das Abstandselement und/oder die Haltemittel in mehreren Richtungen verstellbar ausgebildet sind. Beispielsweise kann vorgesehen sein, dass das Haltemittel in Höhenrichtung, also senkrecht zur Grundebene des Grundelements oder der Grundplatte verstellbar ausgebildet ist. Weiterhin kann vorgesehen sein, dass Teile des Haltemittels und/oder des Abstandselements um eine Achse rotierbar ausgebildet sind. Weiterhin kann auch vorgesehen sein, dass die Haltemittel selbst in einer oder mehreren Richtungen translatorisch verstellbar ausgebildet sind. Damit kann letztendlich das Haltemittel möglichst optimal angeordnet und ausgerichtet werden, beispielsweise um fluchtend mit benachbarten Dachbefestigern und deren Haltemittel eine Montageschiene zur Befestigung von Auflageelementen, insbesondere Photovoltaik- und/oder Solarthermie-Paneele auf zu nehmen.

Die Erfindung führt auch zu einer Befestigungsanordnung umfassend einen an einer Dachkonstruktion, bevorzugt aufweisend eine Dacheindeckung aus Bitumenschindeln und eine Dachunterkonstruktion aus Holz befestigten Dachbefestiger, nach einem der Ansprüche 1 bis 6, wobei erfindungsgemäß vorgesehen ist, dass die Befestigungsmittel, bevorzugt Befestigungsschrauben, von der Oberseite des Grundelements in die Dachkonstruktion eingeschraubt sind, das Ausgleichsmaterial an die Dachkonstruktion, insbesondere die Dacheindeckung, angepresst und teilweise und/oder bereichsweise elastisch verformt ist und die Dichtmasse wenigstens teilweise in Bereiche zwischen den Befestigungsmitteln und der Dachkonstruktion eingebracht ist.

Dies führt, wie oben bereits ausgeführt, zu einer besonders effektiven Abdichtung und gleichzeitig der Möglichkeit den Dachbefestiger beliebig, auch im Bereich von Kanten, Versätzen oder Lücken zwischen Teilen der Dacheindeckung, insbesondere zwischen entsprechenden Dachschindeln zu befestigen, da das Ausgleichsmaterial eine jeweils individuelle Anpassung an den Untergrund und dessen Profil/Verlauf ermöglicht, ein zu starkes Verkippen bei einem unebenen Untergrund verhindert und gleichzeitig eine Dichtwirkung bereitstellt, die zudem durch die Dichtmasse unterstützt wird, die durch Einbringen der Befestigungsmittel, insbesondere durch das Einschrauben der Befestigungsschrauben wenigstens zum Teil in Zwischenräume zwischen den Befestigungsmitteln und der Dachkonstruktion eingebracht wird, sodass durch die Dichtmasse selbst nicht nur die Befestigungsausnehmungen im Dachbefestiger abgedichtet werden, sondern auch die durch die Befestigungsmittel in der Dachkonstruktion erzeugten Kavitäten, beispielsweise Bohr- oder Schraublöcher gleich mitabgedichtet werden.

Dabei ist besonders vorteilhaft auch, dass das Ausgleichsmaterial ein Herauspressen oder Herausquetschen der Dichtmasse durch die Anpressung an die Dacheindeckung gerade verhindert, sodass die Verdrängung der Dichtmasse im Bereich der Befestigungsausnehmungen und deren Verlängerungen im Ausgleichsmaterial zwangsläufig dazu führt, dass die Dichtmasse in den Befestigungsausnehmungen und deren Verlängerungen verteilt und gleichzeitig aber auch in die Dachkonstruktion eingebracht oder eingetragen wird.

Im Hinblick auf die vorteilhaften Wirkungen der Befestigungsanordnung des Dachbefestigers an einer Dachkonstruktion wird auch auf die Vorteile und vorteilhaften Wirkungen des Dachbefestigers verwiesen.

Die oben genannte Aufgabe wird auch durch ein Verfahren zur Befestigung eines Dachbefestigers, bevorzugt nach einer der vorangehend genannten Ausführungsformen, bevorzugt zur Herstellung einer Befestigungsanordnung wie oben beschrieben, gelöst, wobei das Verfahren folgende Verfahrensschritte umfasst:
Befestigen eines Grundelements bevorzugt einer Grundplatte, des Dachbefestigers an der Dachkonstruktion durch das Einbringen von Befestigungsmitteln, bevorzugt Befestigungsschrauben in Befestigungsausnehmungen des Grundelements und die Dachkonstruktion, wobei erfindungsgemäß beim Befestigung des Grundelements ein auf einer Unterseite des Grundelements abseits der Befestigungsausnehmungen angeordnetes, wenigstens teilweise elastisch verformbares Ausgleichsmaterial an die Dachkonstruktion angepresst und teilweise und/oder bereichsweise verformt wird und zudem ein in den Befestigungsausnehmungen im Grundelement und/oder deren Verlängerungen im Ausgleichsmaterial wenigstens teilweise angeordnete, pastöse Dichtmasse von den Befestigungsmitteln mittransportiert und in die Dachkonstruktion, bevorzugt in Hohlräume zwischen den Materialien der Dachkonstruktion und den Befestigungsmitteln eingebracht und/oder eingelagert wird.

Zur vorteilhaften Wirkung, zur Grundidee und zu den besonderen Wirkungen des Befestigungsverfahrens wird zu Vermeidung unnötiger Wiederholungen auf die vorangehende Beschreibung verwiesen.

In einer vorteilhaften Ausführungsform des Verfahrens kann vorgesehen sein, dass die Befestigungsmittel so tief eingebracht, bevorzugt eingeschraubt werden bis ein Dichtelement, bevorzugt ein Dichtring, der Befestigungsmittel dichtend an die Oberseite des Grundelements angepresst und, bevorzugt von einem Kopf des Befestigungsmittels, widergelagert wird. Dadurch kann, wie oben bereits ausgeführt, ein insgesamt dritter Dichtmechanismus oder eine dritte Dichtfunktion geschaffen werden, die zusätzlich zu der pastösen Dichtmasse und dem Ausgleichsmaterial wirkt und dementsprechend die Dichtwirkung verbessert.

In einer weiteren, besonders bevorzugten Variante des Verfahrens kann vorgesehen sein, dass beim Eindringen der Befestigungsmittel in die Befestigungsausnehmungen ein Teil der Dichtmasse in den Befestigungsausnehmungen und/oder deren Verlängerungen im Ausgleichsmaterial verbleibt. Auch dies hat die vorteilhafte Wirkung, dass der Zwischenraum zwischen den Befestigungsmitteln und dem Rand der Befestigungsausnehmungen, also beispielsweise zwischen dem Schraubenschaft und den Befestigungsausnehmungen dichtend aufgefüllt oder ausgefüllt ist, sodass durch diese Zwischenbereiche keine Feuchtigkeit eindringen kann.

Gemäß einer weiteren Variante des Verfahrens kann vorgesehen sein, dass nach dem Einbringen der Befestigungsmittel ein auf der Oberseite des Grundelements angeordnetes Abstandselement und/oder an dessen dem Grundelement gegenüberliegenden Ende angeordnete Haltemittel ausgerichtet werden, bevorzugt in wenigstens einer Richtung und/oder um wenigstens eine Achse ausgerichtet werden, um die Haltemittel direkt oder indirekt im Bezug auf die zu befestigenden Auflageelemente auszurichten. Wie oben bereits ausgeführt wird mit der erfindungsgemäßen Befestigungsanordnung, die über das erfindungsgemäße Verfahren hergestellt wird ein zu starkes Verkippen der Dachbefestiger effektiv unterbunden oder entgegengewirkt. Für eine Feinjustage kann es jedoch besonders vorteilhaft sein, wenn das Abstandselement und/oder die Haltemittel entsprechend bewegbar sind und im Anschluss an die Befestigung ausgerichtet werden, beispielsweise um eine fluchtende Anordnung mit benachbarten Dachbefestigern zu erreichen, um eine geradlinige Montageschiene auf mehreren Dachbefestigern abzustützen oder zu befestigen.

Die vorliegende Erfindung wird nachfolgend auch anhand von rein schematischen und beispielhaften Figuren erläutert werden, die Ausführungsbeispiele der Erfindung wiedergeben.

Darin zeigen:
- Fig. 1:: eine perspektivische Darstellung eines erfindungsgemäßen Dachbefestigers samt Befestigungsmitteln und am Dachbefestiger befestigten Montageelementen für Auflageelemente;
- Fig. 2:: eine Seitendarstellung des erfindungsgemäßen Dachbefestigers samt Befestigungsmitteln;
- Fig. 3:: eine perspektivische Schnittzeichnung durch einen erfindungsgemäßen Dachbefestiger;
- Fig. 4:: eine Seitenansicht eines erfindungsgemäßen Dachbefestigers samt befestigten Komponenten zur Sicherung von Auflageelementen;
- Fig. 5:: ein Ausschnitt einer erfindungsgemäßen Befestigungsanordnung einschließlich eines Ausschnitts einer Dachkonstruktion, mehreren erfindungsgemäßen Dachbefestiger sowie Auflageelementen;
- Fig. 6:: eine Schnittdarstellung durch eine erfindungsgemäße Befestigungsanordnung gemäß der Darstellung der Fig. 5.

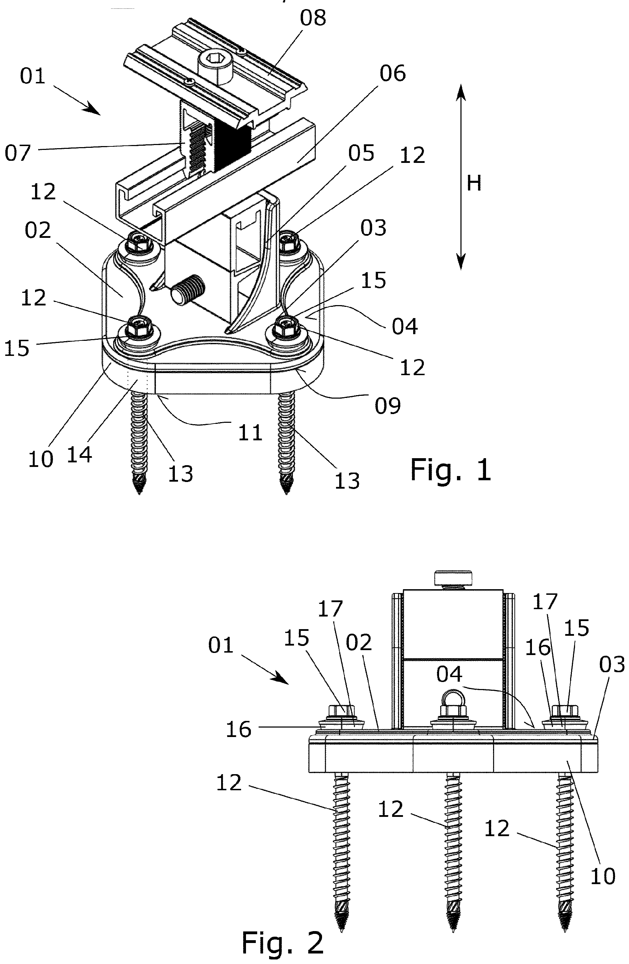

Fig. 1 zeigt einen erfindungsgemäßen Dachbefestiger 01 mit einem als Grundplatte 02 ausgebildeten Grundelement 03. Das Grundelement 03 kann verschiedene Größen haben, um an unterschiedliche Montageanforderungen und Montagesituationen angepasst zu werden. Auf einer Oberseite 04 der Grundplatte 02 ist ein Abstandselement 05 angeordnet, welches variabel oder verstellbar ausgebildet ist und wenigstens in Höhenrichtung H einstellbar und fixierbar ist. An dem oberen Ende des Abstandselements 05 ist über nicht im Detail dargestellte Haltemittel eine Montageschiene 06 mit dem Dachbefestiger 01 verbunden. In die Montageschiene 06 ist ein Haken 07 eingesetzt, der mit einem Klemmblech 08 zwei Photovoltaik- und/oder Solarthermie-Paneele (nicht dargestellt) an oder auf der Montageschiene 06 klemmend sichern kann.

Das Klemmblech 08, der Haken 07 und die Montageschiene 06 sind nicht Gegenstand des erfindungsgemäßen Dachbefestigers.

Der Dachbefestiger 01 weist auf einer Unterseite 09 der Grundplatte 02 eine Schicht eines Ausgleichsmaterials 10 auf. Das Ausgleichsmaterial 10 kann beispielsweise EPDM aufweisen oder daraus bestehen und somit wenigstens teilweise elastisch verformbar sein, sodass sich die Unterseite 11 des Ausgleichsmaterials 10 an eine konturierte Oberfläche, wie beispielsweise die Übergänge zwischen benachbarten Reihen oder Schindeln einer Dacheindeckung anpassen kann, wenn es an die entsprechende Dacheindeckung angepresst wird.

Im angepressten Zustand kann das Ausgleichsmaterial 10 bereits für eine Abdichtung sorgen, sodass keine Feuchtigkeit in die Dachkonstruktion eindringen kann. Die Anpressung kann über das Einbringen und Anziehen von Befestigungsmitteln 12, die bevorzugt als Befestigungsschrauben 13 ausgebildet sein können, bewerkstelligt werden. In der Darstellung der Fig. 1 sind die Befestigungsmittel 12 in dazugehörige Befestigungsausnehmungen 14 im Grundelement 03 eingebracht oder eingesetzt, sodass die Öffnungen der Befestigungsausnehmungen 14 auf der Oberseite 04 der Grundplatte 02 im Wesentlichen von den Köpfen 15 der Befestigungsmittel 12 verschlossen werden.

In der Fig. 1 nicht im Detail dargestellt ist die in den Befestigungsausnehmungen 14 und deren Verlängerung im Ausgleichsmaterial wenigstens teilweise angeordnete pastöse Dichtmasse, die zusätzlich zu dem Ausgleichsmaterial den erfindungsgemäßen Dachbefestiger 01 abdichtet.

In der Seitenansicht der Fig. 2 ist zusätzlich zu den Details, die im Zusammenhang mit der Fig. 1 bereits beschrieben wurden, gut erkennbar, dass unterhalb der Köpfe 15 der Befestigungsmittel 12 weitere Dichtmittel 16 in Form von Dichtringen 17 angeordnet sind, die bei Einbringen oder Einschrauben der Befestigungsmittel 12 in die Befestigungsausnehmungen 14 auf der Oberseite 04 des Grundelements 03 dichtend geklemmt werden, und so zusätzlich den oberen Rand oder die obere Öffnung der Befestigungsausnehmungen 14 abdichten.

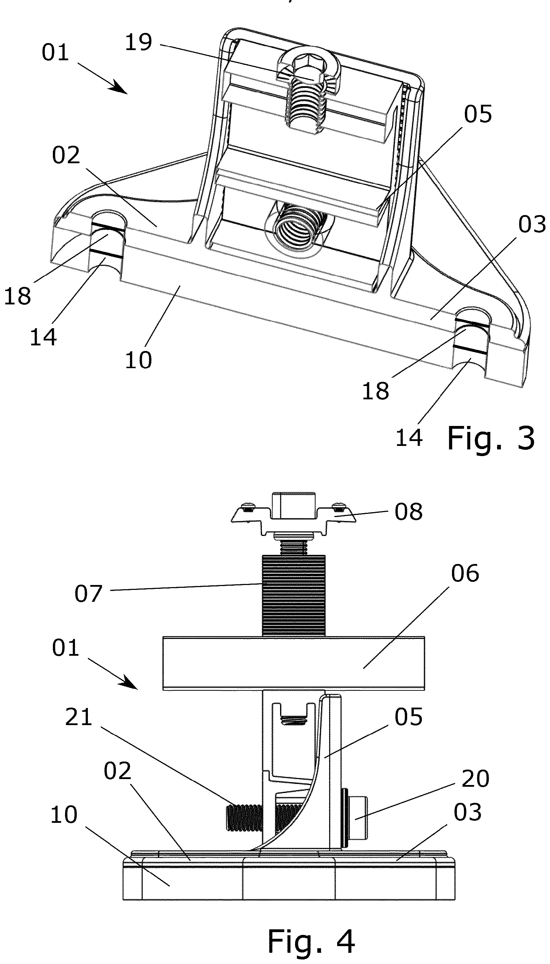

In der Fig. 3 ist in der Schnittdarstellung zunächst erkennbar, dass das Ausgleichsmaterial 10 vollflächig im Bereich des Grundelements 03 oder der Grundplatte 02 ausgebildet ist, und lediglich im Bereich der Befestigungsausnehmungen oder in deren Verlängerung ausgespart ist. In diesem Bereich ist vor der Montage des Dachbefesitgers die pastöse Dichtmasse 18 angeordnet. Besonders bevorzugt wird die pastöse Dichtmasse 18 so ausgewählt vorverarbeitet und appliziert, dass diese ohne äußere Krafteinwirkung - abseits der eigenen Gewichtskraft - im Bereich der Befestigungsausnehmungen und deren Verlängerung im Ausgleichsmaterial verharrt und nicht von selbst ausläuft oder leckt. Wie dargestellt, kann die pastöse Dichtmasse 18 sich über Teile der Befestigungsausnehmungen und/oder Teil des Ausgleichsmaterials erstrecken. Es kann auch vorgesehen sein, dass die pastöse Dichtmasse die Befestigungsausnehmungen und/oder deren Verlängerungen im Ausgleichsmaterial vollständig ausfüllt.

Das Ausgleichsmaterial 10 kann beispielsweise eine Stärke oder Höhe von acht bis zwölf Millimetern aufweisen. Die Grundplatte kann beispielsweise eine Stärke von ein bis vier Millimetern aufweisen.

Die Fig. 3 zeigt den Zustand, in dem der Dachbefestiger vorgefertigt und an den Einsatzort verbracht wird. Das Abstandselement 05 und die Haltemittel 19 sind bereits mit der Grundplatte 03 verbunden, das Ausgleichsmaterial 10 ist bereits mit der Grundplatte 02 verbunden, beispielsweise verklebt, und die Befestigungsausnehmungen 14 und/oder deren Verlängerungen im Ausgleichsmaterial 10 sind bereits mit der Dichtmasse 18 verfüllt. Am Einsatzort oder Montageort muss der Dachbefestiger nur noch auf der Dacheindeckung aufgesetzt und die Befestigungsmittel 12 insbesondere die Befestigungsschrauben 13, in die Befestigungsausnehmungen 14 eingesetzt und mit der Dachkonstruktion verbunden, insbesondere verschraubt, werden. Dabei wird ein Teil der pastösen Dichtmasse 18 im Zwischenraum zwischen den Befestigungsmitteln 12 und den Rändern der Befestigungsausnehmungen 14 verbleiben und dort bereits für eine Dichtwirkung sorgen. Ein weiterer Teil der pastösen Dichtmasse 18 wird von den Befestigungsmitteln 12 mitgenommen oder mittransportiert und wird in Bereichen zwischen den Befestigungsmitteln 12 und den Rändern der in der Dachkonstruktion erzeugten Öffnungen, insbesondere Bohr- oder Schraublöchern abgelagert und somit in die Dachkonstruktion eingebracht, wo eine zusätzliche Dichtwirkung erzeugt wird.

Die Fig. 4 zeigt eine weitere Seitenansicht, anhand derer gut erkennbar ist, wie die Höhenverstellung des Abstandselements 05 erreicht wird. Über ein Sicherungsmittel 20, bevorzugt eine Sicherungsschraube 21 können Teile des Abstandselements 05 voneinander gelöst und miteinander verspannt werden, wobei im gelösten Zustand eine stufenlose oder stufenweise Änderung der Höhe des Abstandselements 05 erreicht werden kann.

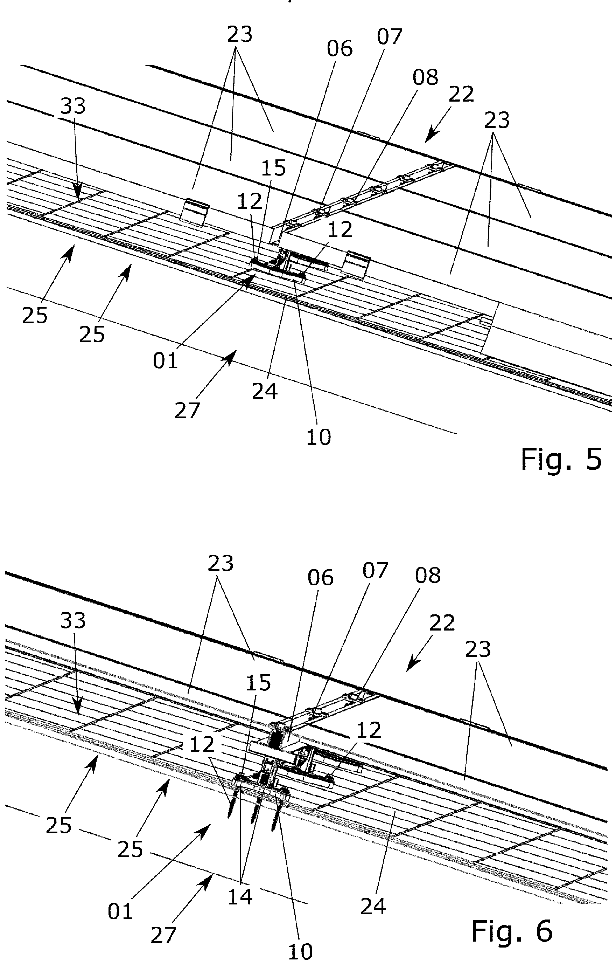

Die Fig. 5 zeigt eine Befestigungsanordnung 22, bei der eine entsprechende Vielzahl von Dachbefestigern 01 mit einer Dachkonstruktion 27 fluchtend verbunden sind und diese, über entsprechende Montageschienen 06 Haken 07 und Klemmbleche 08 eine Vielzahl von Photovoltaik-Paneelen 23 sichern. Bei dem im Vordergrund dargestellten Dachbefestiger 01 ist erkennbar, dass die Grundfläche des Grundelements in Bereichen zu liegen kommt oder angeordnet ist, in denen ein Übergang zwischen benachbarten Dachschindeln 24 der Dacheindeckung 33 sowie ein Übergang von unterschiedlichen Reihen 25 von Dachschindeln 24 ausgebildet ist. Beim Befestigen, insbesondere Verschrauben, des Dachbefestigers 01 wird durch das Ausgleichsmaterial 10 sichergestellt, dass sich die Unterseite des Ausgleichsmaterials 10 vollständig an die Kontur der Dacheindeckung 33 anpasst und gleichzeitig eine Abdichtung bereitstellt.

Gleichzeitig wird über die Dichtmasse eine zusätzliche Dichtwirkung sowohl im Dachbefestiger 01, insbesondere in den Befestigungsausnehmungen 14 als auch in der Dachkonstruktion 27 durch das mit den Befestigungsmitteln 12 mittransportierte Dichtmasse bereitgestellt. Weiterhin vorteilhaft kann über die Dichtmittel unterhalb der Köpfe 15 der Befestigungsmittel 12 eine weitere Dichtwirkung bereitgestellt werden. Über die Verformung der Schicht des Ausgleichsmaterials 10 kann zudem sichergestellt werden, dass der Dachbefestiger 01 nicht zu stark verkippt wird, sodass eine fluchtende Ausrichtung mit weiteren Dachbefestigern 01 leicht möglich ist und eventuelle geringfügige Abweichungen über eine Einstellung oder Verstellung des Abstandselements 05 und/oder das Haltemittel 19 bereitgestellt werden kann.

In der Schnittdarstellung der Fig. 6 ist nochmal dargestellt, wie die Befestigungsmittel 12 der Dachbefestiger 01 sich von der Oberseite des Grundelements 03, durch die Befestigungsausnehmungen 14 und deren Verlängerungen im Ausgleichsmaterial 10 durch die Dacheindeckung 33 der Dachkonstruktion 27 bis in eine Dachunterkonstruktion 26 erstrecken. Dabei wird durch das Einbringen, insbesondere Einschrauben der Befestigungsmittel 12 die pastöse Dichtmasse 18 zumindest zum Teil aus den Befestigungsausnehmungen 14 und deren Verlängerung im Ausgleichsmaterial 10 ausgetragen und in die Dachkonstruktion 27 eingebracht, wo diese ebenfalls eine Dichtwirkung erzeugt. Somit kann über den erfindungsgemäßen Dachhaken und die erfindungsgemäße Befestigungsanordnung ein Eindringen von Feuchtigkeit in die Dachkonstruktion im Bereich der befestigten oder montierten Dachbefestiger effektiv und langfristig verhindert werden.

### Bezugszeichen

- 01: Dachbefestiger
- 02: Grundplatte
- 03: Grundelement
- 04: Oberseite
- 05: Abstandselement
- 06: Montageschiene
- 07: Haken
- 08: Klemmblech
- 09: Unterseite
- 10: Ausgleichsmaterial
- 11: Unterseite
- 12: Befestigungsmittel
- 13: Befestigungsschrauben
- 14: Befestigungsausnehmungen
- 15: Kopf
- 16: Dichtmittel
- 17: Dichtring
- 18: pastöse Dichtmasse
- 19: Haltemittel
- 20: Sicherungsmittel
- 21: Sicherungsschraube
- 22: Befestigungsanordnung
- 23: Photovoltaik-Paneele
- 24: Dachschindeln
- 25: Reihe
- 26: Dachunterkonstruktion
- 27: Dachkonstruktion
- 33: Dacheindeckung
- H: Höhenrichtung

## Patentansprüche

1. Dachbefestiger zur Befestigung von Auflageelementen, insbesondere Photovoltaik- und/oder Solarthermie-Paneelen (23), mit einer Dachkonstruktion (27), bevorzugt aufweisend eine Dacheindeckung (33) aus Bitumenschindeln und eine Dachunterkonstruktion (26) aus Holz, wobei der Dachbefestiger (01) ein Grundelement (03), bevorzugt eine Grundplatte (02) aufweist, die Befestigungsausnehmungen (14) zum Einbringen von Befestigungsmitteln (12), bevorzugt Befestigungsschrauben (13), aufweist und wobei das Grundelement (03) mit einem Abstandselement (05)verbunden ist, an dessen dem Grundelement (03) gegenüberliegenden Ende Haltemittel (19) zum direkten oder indirekten Befestigen von Auflageelementen ausgebildet sind,
**dadurch gekennzeichnet,**
**dass** auf einer dem Abstandselement (05) gegenüber liegenden Seite des Grundelements (03) abseits der Befestigungsausnehmungen (14) ein wenigstens teilweise elastisch verformbares Ausgleichsmaterial (10) angeordnet ist und die Befestigungsausnehmungen (14) im Grundelement (03) und deren Verlängerungen im Ausgleichsmaterial (10) wenigstens teilweise mit einer pastösen Dichtmasse (18) verfüllt sind.

2. Dachbefestiger nach Anspruch 1,
**dadurch gekennzeichnet,**
**dass** das Ausgleichsmaterial (10) vollflächig oder am Rand des Grundelements (03) ununterbrochen umlaufen ausgebildet ist.

3. Dachbefestiger nach einem der Ansprüche 1 oder 2,
**dadurch gekennzeichnet,**
**dass** das Ausgleichsmaterial (10) ein synthetisches und/oder natürliches Kautschukmaterial, bevorzugt EPDM (ethylene propylene diene monomer) aufweist oder aus diesem besteht.

4. Dachhaken nach einem der vorhergehenden Ansprüche,
**dadurch gekennzeichnet,**
**dass** die Dichtmasse (18) Butylkautschuk-Material (co-polymere von isobutylen und isopren) aufweist oder aus diesem besteht.

5. Dachhaken nach einem der vorhergehenden Ansprüche,
**dadurch gekennzeichnet,**
**dass** vom Dachbefestiger (01) umfasste Befestigungsmittel (12), bevorzugt Befestigungsschrauben (13) ein Dichtmittel (16), bevorzugt einen Dichtring (17), aufweisen, welches im montierten Zustand an einer Oberseite (04) des Grundelements (03) dichtend mit dem Befestigungsmittel (12) geklemmt ist.

6. Dachbefestiger nach einem der vorhergehenden Ansprüche,
**dadurch gekennzeichnet,**
**dass** das Abstandselement (05) und/oder die Haltemittel (19) in mehreren Richtungen verstellbar ausgebildet sind.

7. Befestigungsanordnung umfassend einen an einer Dachkonstruktion (27), bevorzugt aufweisend eine Dacheindeckung (33) aus Bitumenschindeln und eine Dachunterkonstruktion (26) aus Holz, befestigten Dachbefestiger (01) nach einem der Ansprüche 1 bis 6,
**dadurch gekennzeichnet,**
**dass** die Befestigungsmittel (12), bevorzugt Befestigungsschrauben (13), von einer Oberseite (04) des Grundelements (03) in die Dachkonstruktion (27) eingeschraubt sind, das Ausgleichsmaterial (10) an die Dachkonstruktion (27) angepresst und teilweise und/oder bereichsweise elastisch verformt ist und die Dichtmasse (18) wenigstens teilweise in Bereiche zwischen den Befestigungsmitteln (12) und der Dachkonstruktion (27) eingebracht ist.

8. Verfahren zur Befestigung eines Dachbefestigers (01), bevorzugt nach einem der Ansprüche 1 bis 6, auf einer Dachkonstruktion (27), bevorzugt zur Herstellung einer Befestigungsanordnung nach Anspruch 7, umfassend die Verfahrensschritte:
Befestigen eines Grundelements (03), bevorzugt einer Grundplatte (02), des Dachbefestigers (01) an der Dachkonstruktion (27) durch das Einbringen von Befestigungsmitteln (12), bevorzugt Befestigungsschrauben (13), in Befestigungsausnehmungen (14) des Grundelements (03) und die Dachkonstruktion (27),
**dadurch gekennzeichnet,**
**dass** beim Befestigen des Grundelements (03) ein auf einer Unterseite (09) des Grundelements (03) abseits der Befestigungsausnehmungen (14) angeordnetes, wenigstens teilweise elastisch verformbares Ausgleichsmaterial (10) an die Dachkonstruktion (27) angepresst und teilweise und/oder bereichsweise verformt wird und zudem ein in den Befestigungsausnehmungen (14) im Grundelement (03) und/oder deren Verlängerungen im Ausgleichsmaterial (10) wenigstens teilweise angeordnete, pastöse Dichtmasse (18) von den Befestigungsmitteln (12) mittransportiert und in die Dachkonstruktion (27), bevorzugt in Hohlräume zwischen Materialien der Dachkonstruktion (27) und den Befestigungsmitteln (12) eingebracht und/oder eingelagert wird.

9. Verfahren nach Anspruch 8,
**dadurch gekennzeichnet**,
das die Befestigungsmittel (12) so tief eingebracht, bevorzugt eingeschraubt, werden, bis ein Dichtmittel (16), bevorzugt ein Dichtring (17), der Befestigungsmittel (12) dichtend an die Oberseite (04) des Grundelements (03) angepresst und bevorzugt von einem Kopf (15) des Befestigungsmittels (12) widergelagert wird.

10. Verfahren nach Anspruch 8 oder 9,
**dadurch gekennzeichnet,**
**dass** beim Einbringen der Befestigungsmittel (12) in die Befestigungsausnehmungen (14) ein Teil der Dichtmasse (18) in den Befestigungsausnehmungen (14) und/oder deren Verlängerungen in dem Ausgleichsmaterial (10) verbleibt.

11. Verfahren nach einem der Ansprüche 8 bis 10,
**dadurch gekennzeichnet,**
**dass** nach dem Einbringen der Befestigungsmittel (12) ein auf der Oberseite (04) des Grundelements (03) angeordnetes Abstandselement (05) und/oder an dessen dem Grundelement (03) gegenüberliegenden Ende angeordnete Haltemittel (19) ausgerichtet werden, bevorzugt in wenigstens einer Richtung und/oder um wenigstens eine Achse ausgerichtet werden, um die Haltemittel (19) direkt oder indirekt in Bezug auf die zu befestigenden Auflageelemente auszurichten.
